(19) Europäisches Patentamt
European Patent Office
Office européen des brevets

(11) **EP 1 443 307 B1**

(12) **EUROPEAN PATENT SPECIFICATION**

(45) Date of publication and mention
of the grant of the patent:
**08.04.2015 Bulletin 2015/15**

(51) Int Cl.:
***G01C 21/26*** *(2006.01)*

(21) Application number: **04002344.2**

(22) Date of filing: **03.02.2004**

(54) **Mounting angle detection device**

Befestigungswinkeldetektionsvorrichtung

Dispositif de détection d'un angle de montage

(84) Designated Contracting States:
**DE FR GB**

(30) Priority: **03.02.2003 JP 2003025783**

(43) Date of publication of application:
**04.08.2004 Bulletin 2004/32**

(73) Proprietor: **Pioneer Corporation
Kanagawa 212-0031 (JP)**

(72) Inventors:
• **Goto, Seiji
Yamada
Kawagoe-shi
Saitama-ken 350-8555 (JP)**
• **Okamoto, Tatsuya
Yamada
Kawagoe-shi
Saitama-ken 350-8555 (JP)**
• **Endo, Isao
Yamada
Kawagoe-shi
Saitama-ken 350-8555 (JP)**
• **Imada, Seiji
Yamada
Kawagoe-shi
Saitama-ken 350-8555 (JP)**

(74) Representative: **Sajda, Wolf E. et al
Meissner, Bolte & Partner GbR
Widenmayerstrasse 47
80538 München (DE)**

(56) References cited:
**EP-A1- 0 496 517       WO-A1-99/04280
JP-A- 9 243 385       JP-A- 10 332 415**

EP 1 443 307 B1

**Description**

BACKGROUND OF THE INVENTION

The present invention relates to a device for detecting a mounting angle of a vehicle-mounted device such as a navigation device.

For instance, a vehicle-mounted navigation device displays guidance by inferentially computing the present position and bearing based on position information sent by GPS (Global Positioning System) and a traveled distance and bearing information provided by an acceleration sensor and a gyroscopic sensor. However, oblique mounting of the aforementioned acceleration and gyroscopic sensors with inclined detection axes relative to the vehicle decreases output values. In order to address the problem, various methods have been developed, as disclosed, for example, in JP 2001-153658 A.

Further, a method is known which corrects errors due to the mounting angle by correcting conversion gain of a sensor such as gyroscopic sensor, as occasion arises, with matching output of the sensor to received GPS data or map data, and then learns the amount of the correction.

Recently, miniaturization of navigation devices has advanced, thereby diversifying the mounting positions such as in-dash areas or spaces below a passenger-side seat. While the mounting position becomes more arbitrary, a navigation device could be mounted in an inclined fashion with respect to a vehicle. However, inclined mounting, for example mounting the aforementioned navigation device at 30 or more degrees upward to the horizontal, or at 5 or more degrees lateral to the front, significantly decreases the output of a sensor such as a gyroscopic sensor, thereby making it impossible for the sensor to precisely correct the output thereof. Thus, an adequate range, or permissible range, is preset in the mounting angle of the navigation device.

Because such limitations on the mounting angle of the navigation device are not generally known, the navigation device may be used with a mounting angle out of the permissible range. In the case where mounting of the navigation device at an angle beyond the permissible range causes errors in the displayed guidance, it may be difficult for a user to recognize a cause of the errors to provide a required remedy.

Further, in the case where mounting of the navigation device to another position changesthe mounting angle accordingly, the navigation device corrects the output of the gyroscopic sensor in accordance with the original mounting angle, thereby causing errors in the displayed guidance concerning the position and bearing.

WO 99/04280 A1 discloses comparing gyro sensed heading changes with GPS determined heading changes to adjust the nominal value for the gyro scale factor.

SUMMARY OF THE INVENTION

It is a primary object of the present invention to provide a mounting angle detection device for preventing a navigation device and the like from being mounted at an improper mounting angle, or maintaining accuracy of a vehicle-mounted device such as the navigation device even when the mounting angle is changed due to, for example, any movement of the device, with addressing above problems.

In order to accomplish the aforementioned, according to the present invention, there is provided a mounting angle detection device for detecting a mounting angle of a vehicle-mounted device mounted in a vehicle, as stated in claim 1.

According to some aspects of an embodiment, there is provided a mounting angle detecting device for a vehicle-mounted device, comprising: a sensitivity detector for determining a ratio of angular velocity detected by a gyroscopic sensormounted in the vehicle-mounted device to reference angular velocity obtained from a GPS receiver mounted in the vehicle-mounted device as sensitivity of the gyroscopic sensor; and a comparator for comparing the sensitivity of the gyroscopic sensor determined by the sensitivity detector to a permissible range concerning the sensitivity and then determining that the mounting angle of the vehicle-mounted device is abnormal when the sensitivity is over the permissible range.

According to some aspects of an embodiment, there is provided a mounting angle detecting device for a vehicle-mounted device, comprising: a sensitivity detector for determining a ratio of angular velocity detected by a gyroscopic sensor mounted in a vehicle-mounted device to reference angular velocity obtained from a GPS receiver mounted in the vehicle-mounted device as sensitivity of the gyroscopic sensor; and a comparator for comparing the sensitivity determined by the sensitivity detector to sensitivity determined last time by the sensitivity detector and then determining that the mounting angle of the vehicle-mounted device has been changed when the sensitivity determined by the sensitivity detector differs from the sensitivity determined last time.

EP 1 443 307 B1

BRIEF DESCRIPTION OF DRAWINGS

These and other objects and advantages will become clear from the following description with reference to the accompanying drawings, wherein:

Fig. 1 shows a block diagram representing a configuration of amounting angle detection device according to a first example;
Fig. 2 shows a relationship between a vehicle-mounted device and a mounting orientation thereof;
Fig. 3 shows a block diagram representing a configuration of a mounting angle processor according to the first example;
Fig. 4 shows a flowchart representing an operation of the mounting angle detection device according to the first example;
Fig. 5 shows a block diagram representing a configuration of the mounting angle detection device according to a second example; and
Fig. 6 shows a flowchart representing an operation of the mounting angle detection device according to the second example.

DETAILED DESCRIPTION OF THE PREFERRED EMBODIMENTS

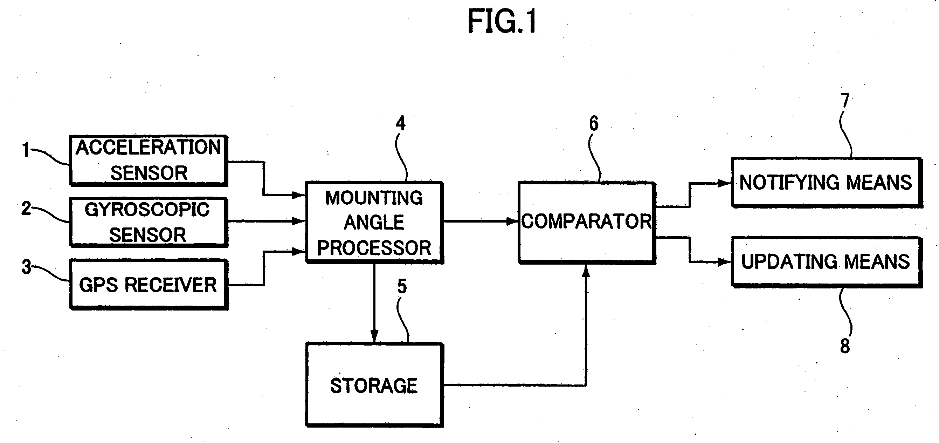

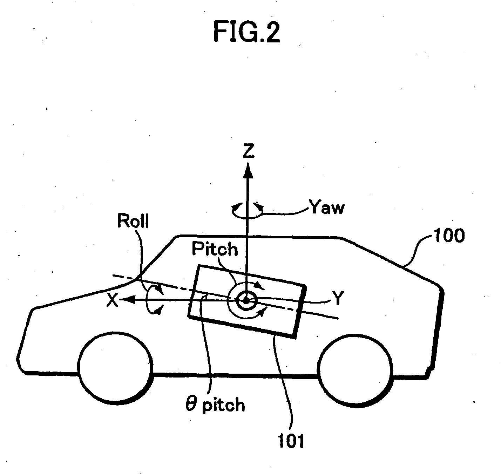

A non claimed example will hereinafter be described with reference to the accompanying drawings. Figure 1 shows a block diagram representing an exemplary configuration of this mounting angle detection device. Figure 2 shows a relationship between a vehicle-mounted device, i . e . a detection target of this mounting angle detection device, and a mounting orientation thereof. It should be noted that this mounting angle detection device detects a mounting angle θ pitch in the pitch direction, a mounting angle θ yaw in the yaw direction, and a mounting angle θ roll in the roll direction of the vehicle-mounted device 101.

In Fig. 1, this mounting angle detection device comprises an acceleration sensor 1 for detecting and outputting acceleration, a gyroscopic sensor 2 for detecting angular velocity around a detection axis, a GPS receiver 3 for outputting position information based on received data from GPS satellites, a mounting angle processor 4 for determining the mounting angle of the vehicle-mounted device 101, a storage 5, a comparator 6, notifying means 7, and updating means 8. It should be noted that the acceleration sensor 1, the gyroscopic sensor 2, and the GPS receiver 3 are provided in the vehicle-mounted device 101.

This mounting angle detection device with the above configuration operates in a manner as described below. First, the mounting angle processor 4 determines a sine value sin(θ pitch) of a mounting angle in the pitch direction by dividing a totalized and averaged value Aave of the detected acceleration of the acceleration sensor 1 by the acceleration of gravity g.

Then, the mounting angle processor 4 determines a cosine value cos (θ yaw) of a mounting angle in the yaw direction by subtracting a product g×sin(θpitch) of the acceleration of gravity g and the sine value of the mounting angle in the pitch direction from the acceleration As obtained from the acceleration sensor 1, and then dividing it by a product Ar×cos(θpitch) of vehicle acceleration Ar obtained from the GPS receiver 3 and a cosine value of the mounting angle in the pitch direction, .

Further, the mounting angle processor 4 determines a ratio of ωs to ωr as sensitivity Sg of the gyroscopic sensor 2, wherein ωs is an angular velocity detected by the gyroscopic sensor 2, and ωr is a reference value of an angular velocity obtained from the GPS receiver 3. The mounting angle processor 4 subsequently determines a cosine value cos(θ roll) of the mounting angle in the roll direction by dividing the sensitivity Sg by the cosine value cos(θ pitch) of the mounting angle in the pitch direction.

Then, the comparator 6 compares the detected mounting angles θ pitch, θ yaw and θ roll to the respective permissible ranges. When the mounting angles are over the respective permissible ranges, the notifying means 7 notifies the user of an abnormality of the mounting angles.

Further, the comparator 6 compares the detected mounting angles to the respective mounting angles detected by the last detecting operation and stored in the storage 5 respectively, to determine that the mounting angles have been changed if the obtained mounting angles are different from the last values. On such a determination, the notifying means 7 notifies the user of the change of the mounting angles. The updating means 8 subsequently resets a function of learning parameters for correcting the output of the sensor, thereby updating the correcting parameters to those relative to the changed mounting angle. Alternatively, the notifying means 7 may output a notification advising the user to reset the learning function.

The mounting angle detection device according to the present example with the aforementioned configuration determines the mounting angles θ pitch, θ yaw and θ roll of the vehicle-mounted device 101 based on the changes of the output of the acceleration sensor 1 and gyroscopic sensor 2, and then notifies the user of the abnormality of the

3

mounting angles when the detected mounting angles are over the respective permissible ranges. Thus, the user can recognize the abnormality of the mounting angles of the vehicle-mounted device 101. In other words, this mounting angle detection device prevents the vehicle-mounted device 101 from being mounted at any improper angle.

Moreover, this mounting angle detection device detects the changes of the mounting angles by comparing the detected mounting angles to the previous mounting angles detected last time, respectively. On detecting the change of the mounting angle, the mounting angle detection device resets the function for learning the correcting parameters of the sensor, and updates the correcting parameters to those relative to the changed mounting angles, thereby maintaining the accuracy of the vehicle-mounted device 101, even in a case where the mounting angles have been changed, by correcting the output with respect to the changed mounting angles.

(First Example)

A first preferred example will be hereinafter described with reference to the accompanying drawings. It should be noted that the description of this example will be made on the mounting angle detection device for detecting the mounting angle of a navigation device 101 mounted in the vehicle 100.

As shown in Fig. 1, this mounting angle detection device comprises an acceleration sensor 1 for detecting and outputting acceleration, a gyroscopic sensor 2 for detecting angular velocity around a detection axis, a GPS receiver 3 for outputting position information based on received data from GPS satellites, a mounting angle processor 4 for determining the mounting angle of the navigation device 101, a storage 5, a comparator 6, notifying means 7, and updating means 8.

The acceleration sensor 1, the gyroscopic sensor 2, and the GPS receiver 3 provided in this mounting angle detection device are sensors mounted on the navigation device 101. It should be noted that these sensors might be provided separately in the navigation device 101.

The mounting angle processor 4 is configured so as to determine the mounting angle $\theta$ pitch in the pitch direction the mounting angle $\theta$ yaw in the yaw direction and the mounting angle $\theta$ roll in the roll direction based on signal information obtained from the acceleration sensor 1, gyroscopic sensor 2, and GPS receiver 3. The detailed configuration will be discussed later.

The storage 5 is a storing device capable of storing and rewriting information therein, and stores the mounting angles $\theta$ pitch, $\theta$ yaw and $\theta$ roll detected by the mounting angle processor 4. It should be noted that mounting angles detected by the last detecting operation and stored in the storage 5 are represented as $\theta$ pitch*, $\theta$ yaw* and $\theta$ roll*, respectively.

The comparator 6 compares the mounting angle detected by the mounting angle processor 4 to a preset value to make a determination.

The notifying means 7 notifies the user of a message concerning an abnormality of the mounting angles via display monitor provided in the navigation device 101 or via a sound.

The updatingmeans 8 updates parameters, such as conversion gain, for correcting the output of the acceleration sensor 1 and the gyroscopic sensor 2.

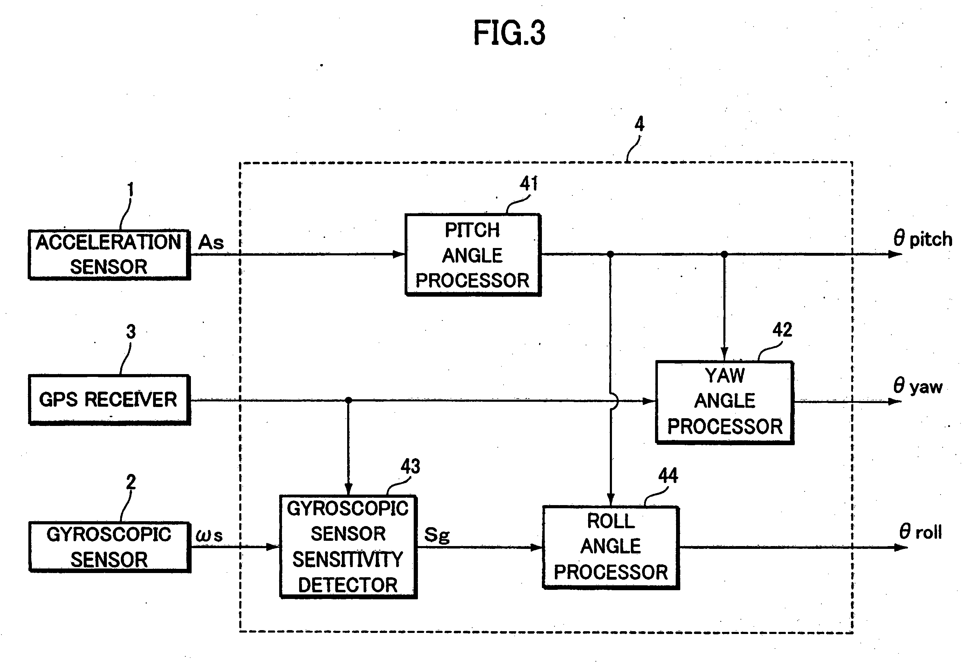

The configuration of the mounting angle processor 4 is now described in detail. Figure 3 shows a block diagram representing a configuration of the mounting angle processor 4. In this figure, the mounting angle processor 4 comprises a pitch angle processor 41, a yaw angle processor 42, a gyroscopic sensor sensitivity detector 43, and a roll angle processor 44.

The pitch angle processor 41 is configured so as to determine the mounting angle $\theta$ pitch in the pitch direction by totalizing and averaging the output As of the acceleration sensor 1 to calculate a totalized and averaged value Aave and then dividing the totalized and averaged value Aave by the acceleration of gravity g.

The yaw angle processor 42 is configured so as to determine a cosine value $\cos(\theta$ yaw) of a mounting angle in the yaw direction by subtracting a product $g \times \sin(\theta$ pitch) of the acceleration of gravity g and the sine value of the mounting angle in the pitch direction from the acceleration As obtained from the acceleration sensor 1, and then dividing it by a product $Ar \times \cos(\theta$ pitch) of acceleration Ar obtained based on the position information from the GPS receiver 3 and a cosine value of the mounting angle in the pitch direction. It should be noted that a configuration is also possible which utilizes pulse signals generated by a vehicle speed sensor, i.e. a sensor for generating a pulse signal every predetermined distance of driving of the vehicle 100, as input and then determines the above reference acceleration Ar based on temporal rate of change concerning the pulse signals.

The gyroscopic sensor sensitivity detector 43 is configured so as to determine an angular velocity $\omega r$ (reference angular velocity) around a pivot based on the position information from the GPS receiver 3 and then obtain a ratio of the reference angular velocity $\omega r$ to an angular velocity $\omega s$ outputted by the gyroscopic sensor 2 as sensitivity Sg of the gyroscopic sensor 2.

The roll angle processor 44 is configured so as to determine a mounting angle $\theta$ roll in the roll direction by dividing the sensitivity Sg of the gyroscopic sensor 2 by the cosine value $\cos(\theta$ pitch) of the mounting angle in the pitch direction.

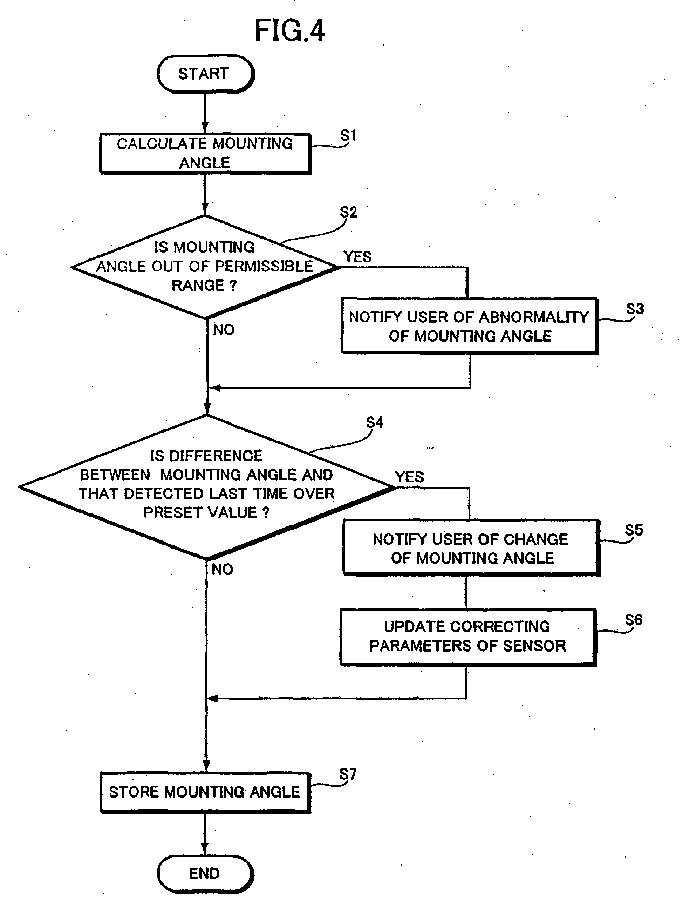

The operation of this mounting angle detection device with the above configuration is now described with reference to a flowchart shown in Fig. 4.

For instance, when the navigation device is switched on, the detecting operation according to this mounting angle detection device is initiated, and in step S1 the mounting angle operator 4 detects the mounting angles θ pitch, θ yaw and θ roll of the navigation device 101. The mounting angle processor 4 operates in a following manner.

$$\sin(\theta\,\text{pitch}) = \text{Aave} \,/\, g \;\;\ldots\ldots\;\;(1)$$

First, the pitch angle processor 41 totalizes the output As of the acceleration sensor 1 to determine an averaged value Aave when the vehicle is, for example, stationary or travels at a constant speed, i.e. the component of the acceleration in the direction of travel is zero. As expressed by the equation (1), sin(θ pitch) equivalent to the mounting angle in the pitch direction is obtained by dividing the averaged value Aave by the acceleration of gravity g.

$$\text{Asx} = \text{As} - g \times \sin(\theta\,\text{pitch}) \;\;\ldots\ldots\;\;(2)$$

$$\cos(\theta\,\text{yaw}) = \text{Asx} \,/\, (\text{Ar} \times \cos(\theta\,\text{pitch})) \;\;\ldots\ldots\;\;(3)$$

As expressed by the equation (2), the yaw angle processor 42 removes subsequently the effect of the acceleration of gravity g in the direction of the detection axis of the acceleration sensor by subtracting a product g×sin(θ pitch) of the acceleration of gravity g and the sine value of the mounting angle in the pitch direction, from the acceleration As obtained from the acceleration sensor 1. Then, the position information obtained from the GPS receiver 3 is inputted, and the reference acceleration Ar is determined based on the amount of temporal change of position, thereby, as expressed by the equation (3), determining the cosine value cos(θ yaw) corresponding to the mounting angle in the yaw direction by dividing the acceleration without the gravitational effect by the product Ar×cos(θ pitch) of the reference acceleration Ar and a cosine value of the mounting angle in the pitch direction.

$$\text{Sg} = \omega\text{s} \,/\, \omega\text{r} \;\;\ldots\ldots\;\;(4)$$

$$\cos(\theta\,\text{roll}) = \text{Sg} \,/\, \cos(\theta\,\text{pitch}) \;\;\ldots\ldots\;\;(5)$$

The gyroscopic sensor sensitivity detector 43 employs the position information obtained from the GPS receiver 3, and determines the reference angular velocity ωr around the pivot of the vehicle based on the amount of temporal change of the bearing. Then, as expressed by the equation (4), a ratio of the output ωs of the gyroscopic sensor to the reference angular velocity ωr is determined as sensitivity Sg of the gyroscopic sensor 2. In other words, the sensitivity Sg of the gyroscopic sensor 2 may be referred to as the rate of decrease of output ωs of the gyroscopic sensor 2 to the actual angular velocity ωr.

The roll angle processor 44, as expressed by the equation (5), determines cos(θ roll) corresponding to the mounting angle in the roll direction by dividing the sensitivity Sg of the gyroscopic sensor 2 by the cosine value cos(θ pitch) of the mounting angle in the pitch direction.

According to this processing, the mounting angle processor 4 determines the mounting angles θ pitch, θ yaw and θ roll of the navigation device 101.

Then, in step S2 in the flowchart shown in Fig. 4, the comparator 6 compares the detected mounting angles to the angles defining the respective permissible ranges. When the comparator 6 determines that at least one of the mounting angles θ pitch, θ yaw and θ roll is out of the permissible range, the processing advances to step S3. In step S3, the notifying means 7 notifies the user via display monitor of the navigation device 101 or via a sound that the navigation device 101 is mounted at an angle out of the permissible range, i.e., the mounting angle is abnormal. It should be noted that the notification might advise the user to position the navigation device 101 within the permissible range.

In step S4, the comparator 6 compares the detected mounting angles θ pitch, θ yaw and θ roll to the respective last value θ pitch*, θ yaw* and θ roll* stored in the storage 5. In this step, if at least one of differences between the mounting angles and the respective last values exceeds a preset amount, the comparator 6 determines that the mounting angle has been changed.

Then, if so, in step S5, the notifying means 7 notifies the user via display monitor that the mounting angle of the navigation device 101 has been changed.

Subsequently, in step S6, the updating means 8 resets the learning function of the navigation device 101, thereby updating the parameters correcting the output of the acceleration sensor 1 or gyroscopic sensor 2, for example conversion gain, to the values relative to the changed mounting angles.

The above correcting parameters are determined by the learning function of the navigation device 101. In other words, the aforementioned learning function determines the correcting parameter without deviation components by totalizing and averaging the amount of correction with comparing the output of the acceleration sensor 1 or gyroscopic sensor 2 to the position or map information from the GPS receiver. The navigation device 101 corrects the errors of the acceleration sensor 1 or gyroscopic sensor 2 occurring due to the mounting angles, by utilizing the correcting parameters.

In other words, in step 6, the updating means 8 resets the aforementioned learning function to initialize the amount of correction accumulated based on the mounting angles before change, thereby restarting the learning function relative to the changed mounting angle.

It should be noted that the aforementioned learning function might be provide in the updating means 8 instead of the navigation device 101. In this case, when detection of any change in the mounting angles in step S4 causes the processing to advance to S6, the updatingmeans 8 may reset the aforementioned learning function, thereby providing the navigation device 101 with the true values. The true values are obtained by correcting the output of the acceleration sensor 1 and gyroscopic sensor 2 as follows.

$$A = G1 \times (As - C1) \quad \text{………} \quad (6)$$

$$= 1 / (\cos(\theta\,pitch) \times \cos(\theta\,yaw))$$

$$\times (As - g \times \sin(\theta\,pitch)) \quad \text{………} \quad (7)$$

$$\omega = G2 \times \omega s \quad \text{………} \quad (8)$$

$$= 1 / (\cos(\theta\,pitch) \times \cos(\theta\,roll)) \times \omega s \quad \text{………} \quad (9)$$

For example, the updatingmeans 8 transforms the conversion gain G1 and the offset C1 for converting the output As of the acceleration sensor 1 to the true value A as expressed by the equation (6), into the values relative to the mounting angles $\theta$ pitch and $\theta$ yaw as expressed by the equation (7), and provides the navigation device 101 with the true value A obtained by correcting the output As of the acceleration sensor 1 based on the transformed conversion gain G1 and offset C1. Further, the updating means 8 transforms the conversion gain G2 for converting the output $\omega$s of the gyroscopic sensor 2 to the true value $\omega$ as expressed by the equation (8), into the values relative to the mounting angles $\theta$ pitch and $\theta$ roll, and provides the navigation device 101 with the true value $\omega$ obtained by correcting the output $\omega$s.

Finally, in step S7, the determined mounting angles $\theta$ pitch, $\theta$ yaw and $\theta$ roll are stored in the storage 5. The stored mounting angles will be used as the last values for comparison in step S4 concerning the next detecting operation.

As described above, the mounting angle detection device according to the present example detects the mounting angles $\theta$ pitch, $\theta$ yaw and $\theta$ roll of the navigation device 101 based on the changes in the output of the acceleration sensor 1 and gyroscopic sensor 2 . Then, if any of the detectedmounting angles is out of the permissible ranges, the user is notified of the abnormality of the mounting angles. Even if the navigation device 101 is mounted at a mounting angle out of the permissible range and thus an error occurs in the displayed guidance, the user can recognize the cause and apply an appropriate remedy. Consequently, this mounting angle detection device can prevent the navigation device 101 from being mounted at a mounting angle out of the permissible range.

Further, this mounting angle detection device detects the change in the mounting angles by comparing the detected mounting angles to the previous mounting angles detected last time. When the change in the mounting angles is detected, the parameters for correcting the output of the sensor are updated based on the values detected this time, thereby maintaining the accuracy of the displayed guidance of the navigation device 101 even in a case where the mounting angles are changed.

Further, this mounting angle detection device resets and restarts the aforementioned learning function for determining the parameters when detecting the change in the mounting angle, thereby obviating the necessity for the user to reset the function and maintaining the accuracy of the displayed guidance of the navigation device 101.

It should be noted that the comparator 6 might detect the abnormality and change in the mounting angles by comparing the sine value sin(θ pitch) of the mounting angle in the pitch direction, the cosine value cos(θ yaw) of the mounting angle in the yaw direction, and the cosine value cos(θ roll) in the roll direction to the respective permissible ranges or to the respective values detected last time.

(Second Example)

A second preferred example according to the present invention will be hereinafter described with reference to the accompanying drawings. It should be noted that the same elements as those of the first example or the elements corresponding to those of the first example are referenced with the same symbols.

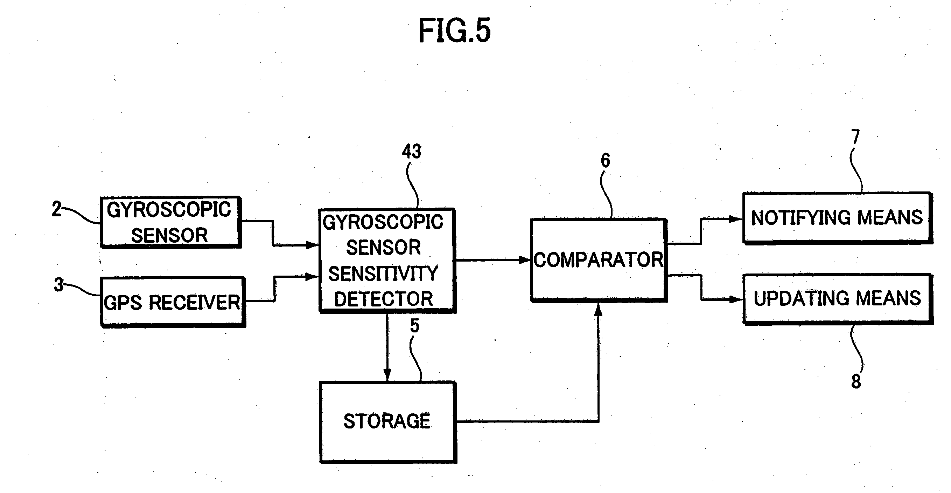

Figure 5 shows an block diagram representing a configuration according to this mounting angle detection device. In this figure, the mounting angle detection device comprises a gyroscopic sensor 2, a GPS receiver 3, a gyroscopic sensor sensitivity detector 43, a storage 5, a comparator 6, notifying means 7, and updating means 8.

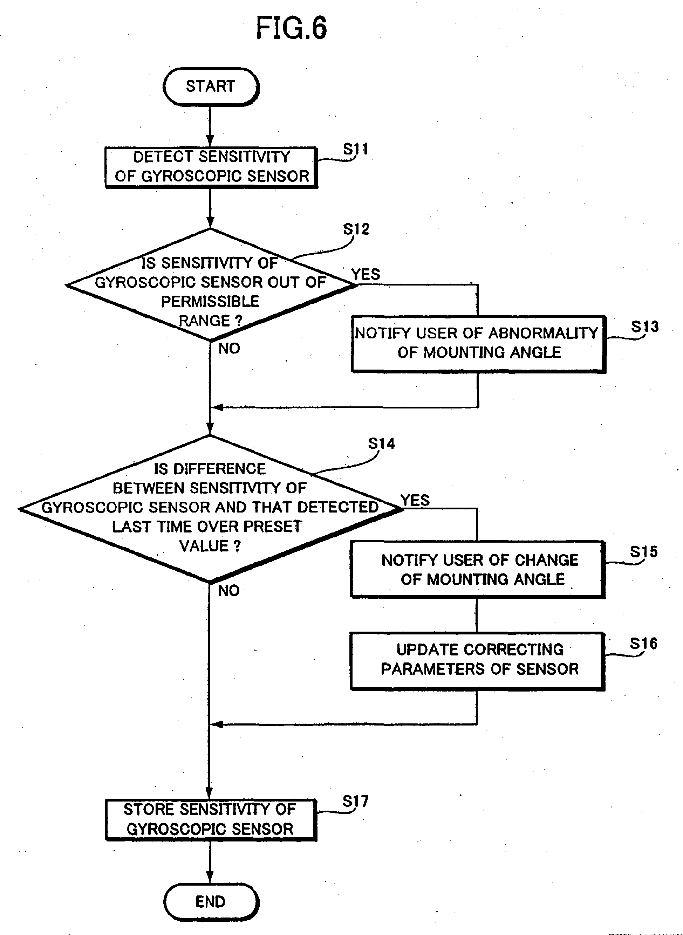

The operation of this mounting angle detection device is now described with reference to a flowchart shown in Fig. 6.

When the detecting operation according to this mounting angle detection device is initiated, the gyroscopic sensor sensitivity detector 43 determines the reference angular velocity ωr around the pivot of the vehicle based on the amount of temporal change of the bearing in the position information from the GPS receiver 3 in step S11, and determines the ratio of the output ωs of the gyroscopic sensor 2 to the reference angular velocity ωr as sensitivity Sg of the gyroscopic sensor 2.

Next, in step S12, the comparator 6 compares the aforementioned sensitivity Sg of the gyroscopic sensor 2 to the permissible range of the sensitivity. The permissible range is set in a range of sensitivity allowing the navigation device 101 to display accurate guidance. The comparator 6 determines that the mounting angles of the navigation device 101 are abnormal if the sensitivity Sg of the gyroscopic sensor 2 is out of the permissible range.

Then, in step S13, the notifying means 7 notifies the user via the display monitor that the mounting angles of the navigation device 101 are abnormal.

Further, in step S14, the comparator 6 compares the detected sensitivity Sg of the gyroscopic sensor 2 to the stored sensitivity Sg* determined by the last detecting operation. The comparator 6 determines that the mounting angles are changed if the deference between the sensitivity Sg of the gyroscopic sensor 2 and the last sensitivity Sg* stored in the storage 5 exceeds the preset amount.

Then, in step S15, the notifying means 7 notifies the user via the displaymonitor that the mounting angles of the navigation device 101 have been changed.

In step S16 subsequent to the step S15, the updating means 8 resets the learning function for determining the parameters for correcting the output of the gyroscopic sensor 2, thereby updating the correcting parameter to those relative to the changed mounting angles.

Finally, in step S17, the determined sensitivity Sg of the gyroscopic sensor 2 is stored in the storage 5.

The mounting angle detection device according to the present second example detects the sensitivity Sg of the gyroscopic sensor 2, and determines the abnormality of the mounting angles of the navigation device 101 based on the sensitivity Sg. On detection of the abnormality of the mounting angles, the user is notified of the abnormality. Even if the navigation device 101 is mounted at an improper mounting angle out of the permissible range and thus an error occurs in the displayed guidance, the user can recognize the cause and apply an appropriate remedy. Consequently, this mounting angle detection device can prevent the navigation device 101 from being mounted at an improper mounting angle.

Further, this mounting angle detection device detects the change of the mounting angles by comparing the detected sensitivity Sg of the gyroscopic sensor to the sensitivity Sg* detected last time. On detecting the change of the mounting angle, the mounting angle detection device resets the function for learning the correcting parameters of the sensor, and updates the correcting parameters to those relative to the changed mounting angles, thereby maintaining the accuracy of the navigation device 101, even in a case where the mounting angles have been changed.

Moreover, on detecting a change of the mounting angles, the present mounting angle detection device resets and restarts the aforementioned learning function for determining the parameters, thereby maintaining the accuracy of the displayed guidance of the navigation device 101 without any reset operation by the user.

**Claims**

1.  A device for detecting a mounting angle of a vehicle-mounted device (101), comprising:

- a gyroscopic sensor (2) and a GPS-receiver (3) mounted in the mounting angle detecting device,
- a sensitivity detector (43) for determining a ratio of angular velocity detected by the gyroscopic sensor (2) mounted in the vehicle-mounted device to a reference angular velocity obtained from a GPS receiver (3) mounted in the vehicle-mounted device as a sensitivity of the gyroscopic sensor (2);

**characterized by** comprising:

- a comparator (6) for comparing the sensitivity of the gyroscopic sensor (2) determined by the sensitivity detector (43) to a permissible range concerning the sensitivity and then determining the mounting angle of the vehicle-mounted device is abnormal when the sensitivity is over the permissible range; and
- notifying means (7) for notifying that the mounting angle is abnormal when the comparator (6) determines the abnormality.

**2.** The device according to claim 1,
further comprising a storage (5) for storing sensitivity values determined by the sensitivity detector (43), wherein the comparator (6) is adapted to compare, when the sensitivity determined by the sensitivity detector (43) is not over the permissible range, the sensitivity determined by the sensitivity detector (43) to the sensitivity determined last time by the sensitivity detector (43) and stored in the storage (5), and then to determine that the mounting angle of the vehicle-mounted device has been changed when the sensitivity determined by the sensitivity detector (43) differs from the sensitivity determined last time.

**3.** The device according to claim 2,
further comprising updating means (8) for resetting the operation of the vehicle-mounted device when the comparator (6) determines that the mounting angle has been changed.

**Patentansprüche**

**1.** Vorrichtung zum Detektieren eines Montagewinkels einer an einem Fahrzeug montierten Einrichtung (101), wobei die Vorrichtung folgendes aufweist:

- einen Gyroskopsensor (2) und einen GPS-Empfänger (3), die in der Montagewinkel-Detektiervorrichtung angebracht sind,
- einen Empfindlichkeitsdetektor (43) zum Bestimmen eines Verhältnisses zwischen einer Winkelgeschwindigkeit, die von dem Gyroskopsensor (2) gemessen wird, der in der am Fahrzeug montierten Einrichtung montiert ist, und einer Referenz-Winkelgeschwindigkeit, die von einem GPS-Empfänger (3) erhalten wird, der in der am Fahrzeug montierten Einrichtung montiet ist, als Empfindlichkeit des Gyroskopsensors (2),

**gekennzeichnet durch**

- einen Komparator (6), um die Empfindlichkeit des Gyroskopsensors (2), die mit dem Empfindlichkeitsdetektor (43) bestimmt wird, mit einem zulässigen Bereich hinsichtlich der Empfindlichkeit zu vergleichen und um anschließend zu bestimmen, dass der Montagewinkel der am Fahrzeug montierten Einrichtung anormal ist, wenn die Empfindlichkeit über dem zulässigen Bereich liegt; und
- eine Mitteilungseinrichtung (7), um mitzuteilen, dass der Montagewinkel anormal ist, wenn der Komparator (6) die Anormalität bestimmt hat.

**2.** Vorrichtung nach Anspruch 1,
die ferner einen Speicher (5) aufweist, um Empfindlichkeitswerte zu speichern, die mit dem Empfindlichkeitsdetektor (43) bestimmt werden,
wobei der Komparator (6) dazu ausgelegt ist, wenn die von dem Empfindlichkeitsdetektor (43) bestimmte Empfindlichkeit nicht über dem zulässigen Bereich liegt, die von dem Empfindlichkeitsdetektor (43) bestimmte Empfindlichkeit mit der Empfindlichkeit zu vergleichen, die beim letzten Mal von dem Empfindlichkeitsdetektor (43) bestimmt worden ist und in dem Speicher (5) gespeichert ist, und um anschließend zu bestimmen, dass sich der Montagewinkel der am Fahrzeug montierten Einrichtung geändert hat, wenn die von dem Empfindlichkeitsdetektor (43) bestimmte Empfindlichkeit sich von der beim letzten Mal bestimmten Empfindlichkeit unterscheidet.

**3.** Vorrichtung nach Anspruch 2,

die ferner eine Aktualisierungseinrichtung (8) aufweist, um den Betrieb der am Fahrzeug montierten Einrichtung zurückzusetzen, wenn der Komparator (6) bestimmt hat, dass sich der Montagewinkel geändert hat.

**Revendications**

1. Dispositif pour détecter un angle de montage d'un dispositif monté sur véhicule (101), comprenant:

   - un capteur gyroscopique (2) et un récepteur GPS (3) montés dans le dispositif de détection d'angle de montage,
   - un détecteur de sensibilité (43) pour déterminer un rapport de la vitesse angulaire détectée par le capteur gyroscopique (2) monté dans le dispositif monté sur véhicule sur une vitesse angulaire de référence obtenue d'un récepteur GPS (3) monté dans le dispositif monté sur véhicule à titre de sensibilité du capteur gyroscopique (2);

   **caractérisé en ce qu**'il comprend:

   - un comparateur (6) pour comparer la sensibilité du capteur gyroscopique (2) déterminée par le détecteur de sensibilité (43) à une plage permissible concernant la sensibilité, et pour déterminer alors que l'angle de montage du dispositif monté sur véhicule est anormal quand la sensibilité est au-dessus de la plage permissible; et
   - des moyens de notification (7) pour notifier que l'angle de montage est anormal quand le comparateur (6) détermine l'anomalie.

2. Dispositif selon la revendication 1,
   comprenant en outre un dispositif de stockage (5) pour stocker des valeurs de sensibilité déterminées par le détecteur de sensibilité (43),
   dans lequel le comparateur (6) est adapté, quand la sensibilité déterminée par le détecteur de sensibilité (43) n'est pas au-dessus de la plage permissible, à comparer la sensibilité déterminée par le détecteur de sensibilité (43) à la sensibilité déterminée la dernière fois par le détecteur de sensibilité (43) et stockée dans le dispositif de stockage (5), et ensuite à déterminer que l'angle de montage du dispositif monté sur véhicule a été changé quand la sensibilité déterminée par le détecteur de sensibilité (43) diffère de la sensibilité déterminée la dernière fois.

3. Dispositif selon la revendication 2,
   comprenant en outre un moyen de mise à jour (3) pour remettre à zéro le fonctionnement du dispositif monté sur véhicule quand le comparateur (6) détermine que l'angle de montage a été changé.

# FIG.1

# FIG.2

# FIG.3

ACCELERATION SENSOR — 1

As

PITCH ANGLE PROCESSOR — 41 → $\theta$ pitch

GPS RECEIVER — 3

YAW ANGLE PROCESSOR — 42 → $\theta$ yaw

GYROSCOPIC SENSOR — 2

$\omega s$

GYROSCOPIC SENSOR SENSITIVITY DETECTOR — 43

Sg

ROLL ANGLE PROCESSOR — 44 → $\theta$ roll

4

EP 1 443 307 B1

# FIG.4

```
        ┌─────────────┐
        │    START    │
        └──────┬──────┘
               │
        ┌──────▼──────────┐  S1
        │ CALCULATE MOUNTING │
        │      ANGLE       │
        └──────┬──────────┘
               │
          ╱────▼────╲  S2
         ╱ IS MOUNTING ╲        ┌──────────────────────┐  S3
        ╱ ANGLE OUT OF ╲  YES  │ NOTIFY USER OF ABNORMALITY │
        ╲  PERMISSIBLE ╱──────▶│    OF MOUNTING ANGLE    │
         ╲   RANGE ?  ╱        └──────────────────────┘
          ╲────┬────╱
            NO │
               │
          ╱────▼────╲  S4
         ╱ IS DIFFERENCE ╲        ┌──────────────────────┐  S5
        ╱ BETWEEN MOUNTING╲ YES  │  NOTIFY USER OF CHANGE  │
        ╲ ANGLE AND THAT  ╱─────▶│   OF MOUNTING ANGLE    │
        ╲ DETECTED LAST  ╱       └──────────┬───────────┘
         ╲ TIME OVER    ╱                   │
          ╲PRESET VALUE?╱        ┌──────────▼───────────┐  S6
            ╲──┬──╱              │   UPDATE CORRECTING   │
             NO│                 │ PARAMETERS OF SENSOR  │
               │                 └──────────────────────┘
               │
        ┌──────▼──────────┐  S7
        │ STORE MOUNTING ANGLE │
        └──────┬──────────┘
               │
        ┌──────▼──────┐
        │     END     │
        └─────────────┘
```

# FIG.5

GYROSCOPIC SENSOR `2`

GPS RECEIVER `3`

GYROSCOPIC SENSOR SENSITIVITY DETECTOR `43`

STORAGE `5`

COMPARATOR `6`

NOTIFYING MEANS `7`

UPDATING MEANS `8`

EP 1 443 307 B1

# FIG.6

```
                    START

                      │
                      ▼
        ┌──────────────────────────┐    S11
        │   DETECT SENSITIVITY      │
        │   OF GYROSCOPIC SENSOR    │
        └──────────────────────────┘
                      │
                      ▼
              IS SENSITIVITY OF              S12
          GYROSCOPIC SENSOR OUT OF      YES
              PERMISSIBLE        ────────────────┐
                RANGE ?                          │
                      │                          ▼
                     NO          ┌──────────────────────────┐   S13
                      │          │ NOTIFY USER OF ABNORMALITY│
                      │          │   OF MOUNTING ANGLE       │
                      │          └──────────────────────────┘
                      │                          │
                      ◄──────────────────────────┘
                      │
                      ▼
                IS DIFFERENCE                    S14
            BETWEEN SENSITIVITY OF
        GYROSCOPIC SENSOR AND THAT DETECTED  YES
            LAST TIME OVER PRESET      ──────────┐
                 VALUE ?                         │
                      │                          ▼
                     NO          ┌──────────────────────────┐   S15
                      │          │   NOTIFY USER OF CHANGE   │
                      │          │   OF MOUNTING ANGLE       │
                      │          └──────────────────────────┘
                      │                          │
                      │                          ▼
                      │          ┌──────────────────────────┐   S16
                      │          │   UPDATE CORRECTING       │
                      │          │   PARAMETERS OF SENSOR    │
                      │          └──────────────────────────┘
                      │                          │
                      ◄──────────────────────────┘
                      │
                      ▼
        ┌──────────────────────────┐    S17
        │   STORE SENSITIVITY OF    │
        │   GYROSCOPIC SENSOR       │
        └──────────────────────────┘
                      │
                      ▼
                     END
```

**EP 1 443 307 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001153658 A

- WO 9904280 A1